# DEMANDE DE BREVET EUROPEEN

(11) **EP 0 992 730 A1**
(43) Date de publication de la demande: **12.04.2000**
(21) Numéro de dépôt: 98420181.4
(22) Date de dépôt: 09.10.1998
(51) Int. Cl.: F16L 49/02, F16L 21/04, C02F 1/32, F16L 5/02

(54) **Dispositif d'étanchéité adapté à un tube**

(71) Demandeur: S.C.I. De Carnac, 34970 Boirargues (FR)
(72) Inventeur: Ausset, Georges, 34970 Boirargues (FR)
(74) Mandataire: Bratel, Gérard

(57) **Abrégé**

Ce dispositif est adapté à un tube fragile, et/ou présentant des variations dimensionnelles importantes, qui traverse une ouverture circulaire (6) d'une paroi. L'ouverture (6) présente un épaulement annulaire (11), qui délimite une surface annulaire plane raccordée à une surface cylindrique (12), une partie (10) du tube (4) faisant saillie au-delà de l'épaulement (11). Entre le tube (4) et la surface cylindrique (12) est disposé un joint torique élastique (13), inséré dans une bague rigide (14) de hauteur inférieure au diamètre de la section du joint (13) à l'état libre. L'introduction et le serrage d'une entretoise cylindrique (15), entre le tube (4) et la surface cylindrique (12), permet de déformer le joint (13) vers l'intérieur pour le presser contre le tube (4).

## Description

La présente invention concerne un dispositif d'étanchéité adapté à un tube, ou à tout autre objet cylindrique analogue, qui traverse une paroi pourvue d'une ouverture circulaire. Ce dispositif d'étanchéité est destiné, plus particulièrement, à un tube en matière fragile, telle que du verre, et/ou un tube pouvant présenter des variations dimensionnelles importantes, en particulier un tube plus ou moins ovalisé.

Le problème de la réalisation d'une étanchéité, vis-à-vis d'un tel tube, se présente entre autres dans le cas d'un appareil de stérilisation d'eau, telle qu'eau de piscine, par traitement aux rayons ultraviolets, comportant une cuve avec une entrée d'eau et une sortie d'eau, dans laquelle est logé un tube de verre de silice contenant lui-même un générateur de rayons ultraviolets, la cuve étant dotée, à ses extrémités, de deux ouvertures circulaires coaxiales réalisées chacune dans l'épaisseur de la paroi de cette cuve, et le tube étant placé, dans la cuve, de telle sorte que ses extrémités viennent dans l'épaisseur de la paroi de la cuve et y sont maintenues en place.

Dans ce type d'application, l'intérêt d'un tube en verre de silice, aussi désigné comme "quartz", est qu'outre sa transparence il est très perméable aux rayons ultraviolets et qu'il présente une résistance aux variations de température, ainsi qu'aux agents chimiques.

Par contre, l'utilisation d'un tube en verre de silice pose des problèmes pour la réalisation d'une étanchéité annulaire, autour de ce tube, entre l'intérieur et l'extérieur de la cuve, aux endroits où ce tube traverse la paroi de la cuve.

Ainsi, un inconvénient particulièrement sensible du verre de silice, utilisé sous forme de tube, est qu'il présente des variations dimensionnelles importantes, les tolérances dimensionnelles de fabrication pouvant être de l'ordre de plus ou moins 3%. De tels tubes présentent également un coefficient d'ovalisation important, qui peut atteindre 15% du diamètre extérieur nominal, ainsi qu'une variation de longueur en fonction des variations de température.

Le problème est encore accru du fait que, malgré ces variations dimensionnelles importantes, de tels tubes doivent être montés avec un jeu permettant leur centrage, et évitant de soumettre ces tubes à des contraintes qui provoqueraient leur rupture.

La présente invention vise à résoudre ces problèmes, ou les difficultés analogues rencontrées dans d'autres applications comparables, en fournissant un dispositif d'étanchéité perfectionné, qui s'adapte parfaitement à un tube pouvant présenter des variations dimensionnelles importantes, et évite les risques de cassure du tube si celui-ci est fragile.

A cet effet, le dispositif d'étanchéité selon l'invention, pour tube ou autre objet cylindrique traversant une paroi pourvue d'une ouverture circulaire, est caractérisé en ce que :
- ladite paroi, autour de l'ouverture de passage du tube, présente un épaulement annulaire délimitant une surface annulaire plane raccordée à une surface cylindrique, et définissant un logement annulaire,
- une partie de tube fait saillie au-delà de l'épaulement,
- entre le tube et ladite surface cylindrique est disposé au moins un joint torique élastique, entourant le tube,
- le joint torique est inséré dans une bague rigide, de hauteur inférieure au diamètre de la section du joint torique à l'état libre,
- une entretoise cylindrique est introduite dans le logement annulaire, entre le tube et la surface cylindrique précitée, et en regard du joint torique inséré dans la bague, et
- des moyens de serrage sont prévus, pour solliciter l'entretoise en direction du joint torique, en déformant ce joint vers l'intérieur et en le pressant contre le tube.

De ce fait, le joint torique, confiné extérieurement par la bague, ne peut se déformer que vers l'intérieur, et il est ainsi pressé par son côté intérieur contre le tube, en réalisant l'étanchéité entre le tube et la paroi traversée, au niveau de l'épaulement pratiqué dans cette paroi. Le fait que la bague possède une hauteur inférieure au diamètre initial du joint torique permet le rapprochement de l'entretoise cylindrique, sous l'effet des moyens de serrage, et en conséquence la déformation du joint vers l'intérieur et son pressage contre le tube. Comme on le conçoit, un tel dispositif permet non seulement une adaptation du joint à la forme et aux dimensions du tube, même si ce dernier est ovalisé, mais il permet aussi une adaptation à la position du tube relativement à l'ouverture de passage traversée par ce tube, en autorisant une excentration, l'ensemble formé par le joint et par la bague étant mobile relativement à l'épaulement annulaire.

Suivant une forme de réalisation de l'invention, l'entretoise annulaire est dotée d'au moins une bride saillant radialement vers l'extérieur, et percée de trous, tandis que les moyens de serrage sont constitués par des goujons, solidaires de la paroi, qui sont disposés autour de l'ouverture de celle-ci et qui traversent lesdits trous. Le dispositif peut ainsi être facilement monté et démonté, et également réglé en ce qui concerne la compression du joint.

Selon les applications, le tube peut s'étendre plus ou moins loin au-delà de ladite paroi, ou au contraire s'interrompre sensiblement au niveau de cette paroi, seule une extrémité du tube faisant alors saillie au-delà de l'épaulement. Dans ce dernier cas, l'entretoise cylindrique peut être conformée en un anneau, obturé par une plaque circulaire d'occultation, apte à donner accès à l'intérieur du tube.

En particulier, dans le cas de l'application de l'invention à un tube en verre de silice monté dans la cuve d'un appareil de stérilisation d'eau par traitement aux rayons ultraviolets, le dispositif d'étanchéité de l'invention est mis en oeuvre à chacune de deux extrémités du tube, faisant saillie au-dessus de l'épaulement de l'une des deux ouvertures de passage ménagées dans la paroi de la cuve ; la plaque d'occultation permet alors de protéger le générateur de rayons ultraviolets, logé dans le tube, tout en donnant accès à ce générateur.

L'invention sera mieux comprise à l'aide de la description qui suit, en référence au dessin schématique illustrant, à titre d'exemple, une forme d'exécution de ce dispositif d'étanchéité :
Figure 1 est une vue de face, avec coupe partielle, d'un appareil de stérilisation d'eau incorporant le dispositif d'étanchéité objet de l'invention ;
Figure 2 est une vue de détail en coupe, à échelle agrandie, de ce dispositif d'étanchéité.

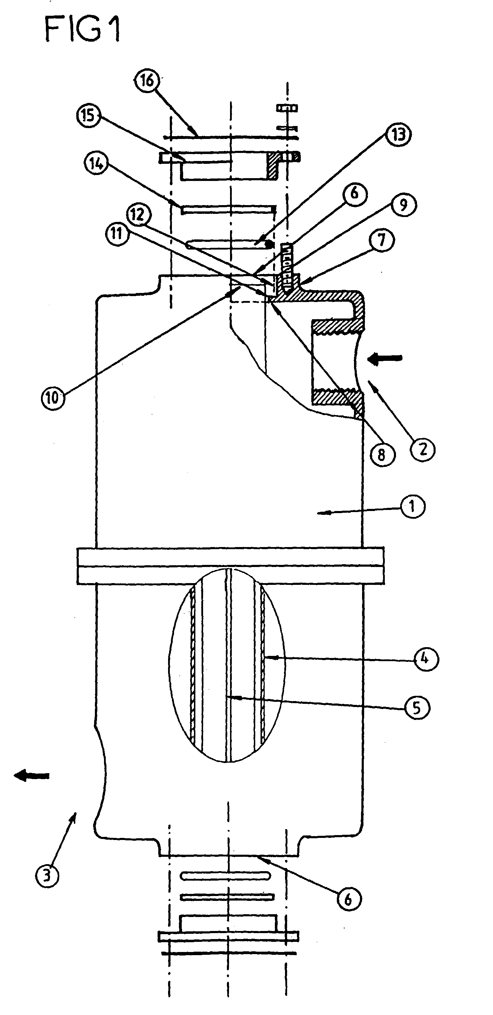

Dans ce qui suit, l'invention est décrite dans le cadre, non limitatif, de son application à un appareil de stérilisation de l'eau de piscine, tel que représenté à la figure 1.

Cet appareil comprend une cuve 1 de forme générale cylindrique, et d'axe vertical, ici réalisée en deux demi-cuves accolées, avec une entrée d'eau 2 latérale, dans sa partie supérieure, et une sortie d'eau 3 également latérale, dans sa partie inférieure. Dans la cuve 1 est placé, verticalement, un tube 4 en verre de silice, contenant un émetteur 5 de rayons ultraviolets relié à une source d'énergie et à un boîtier de commande, non représentés.

La cuve 1 est dotée de deux ouvertures circulaires 6, alignées et centrées sur son axe vertical, et ménagées respectivement dans sa paroi supérieure formant sommet et dans sa paroi inférieure formant fond, plus particulièrement dans des bossages circulaires 7 de ses parois supérieure et inférieure. Chacune des ouvertures 6 présente des dispositions caractéristiques identiques ; pour cette raison, seule l'une d'entre elles représentée en coupe au niveau de l'arrivée d'eau 2 est ici décrite.

Au niveau de son extrêmité supérieure, le tube en verre de silice 4 est de longueur inférieure à la distance entre l'ajutage interne 8 de l'ouverture 6 ménagée dans la cuve et son ajutage externe 9. De ce fait, au montage, chacune des extrémités inférieure et supérieure 10 du tube 4 se trouve positionnée dans l'ouverture 6 et dans l'épaisseur de la paroi ou du bossage 7 la renforçant.

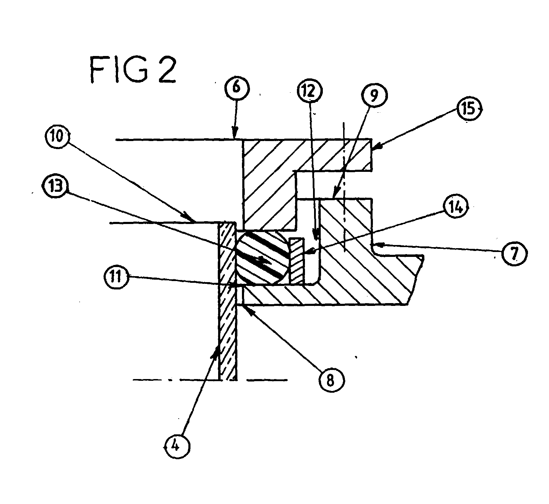

La paroi de la cuve 1 au niveau inférieur de l'ouverture 6 présente, autour de l'orifice de passage de l'extrémité 10 du tube, un épaulement annulaire 11 délimitant une surface annulaire plane, comme montré plus en détail sur la figure 2. Le diamètre de l'ouverture 6, à ce niveau référencé par 8, est très légèrement supérieur au diamètre du tube en verre de silice 4.

La surface annulaire plane de l'épaulement 11 est surmontée d'une surface cylindrique verticale 12 définissant, avec l'épaulement 11 et la paroi extérieure de l'extrémité 10 du tube 4, un logement annulaire.

Entre le tube 4 et la paroi cylindrique 12, dans ce logement, est disposé un joint torique 13 de dimensions adaptées qui entoure le tube 4 de préférence en frottement doux sans serrage élastique. Le diamètre de la section du joint torique 13 est supérieur à la différence entre le diamètre extérieur du tube 4 et la diamètre de l'orifice 6 de la cuve 1 au niveau de l'ajutage 8.

Le joint torique 13 est disposé dans une bague usinée 14 en acier inoxydable ou équivalent, pour que ses dimensions soient parfaitement maîtrisées. La hauteur de la bague 14 est inférieure au diamètre de la section circulaire du joint torique 13 à l'état libre.

Une entretoise cylindrique 15 est introduite dans le logement annulaire, entre le tube 4 et la surface cylindrique verticale 12, au-dessus du joint torique 13. Par pression exercée sur l'entretoise 15 est réalisée une déformation du joint torique 13 dans les limites dimensionnelles de la bague 14, qui elle ne subit pas de pression et n'est pas susceptible de déformation.

De ce fait, la déformation du joint torique 13 est obligatoirement orientée vers le tube 4, ce qui permet au joint 13 de compenser les variations dimensionnelles dudit tube 4, soit provenant de sa structure, soit résultant des variations thermiques subies.

Avantageusement, l'entretoise 15 est une bague dotée de brides radiales avec perçages à travers lesquels passent des goujons pris dans la masse de la paroi de la cuve 1, et cette entretoise 15 est obturée par une plaque d'occultation 16. Le serrage des écrous, vissés sur les goujons, assure la déformation du joint torique 13, par enfoncement de la bague entretoise 15 en direction de l'épaulement 11. Le diamètre interne de la bague entretoise 15 est légèrement supérieur au diamètre externe du tube 4 et le diamètre externe de la bague entretoise 15 est inférieur à celui défini par la surface cylindrique 12, de sorte que ladite bague entretoise 15 puisse s'enfoncer, sans rencontrer d'obstacle, dans le logement annulaire précédemment défini. Le fait que la bague 14 (dans laquelle est inséré le joint 13) soit de hauteur inférieure au diamètre initial de la section du joint torique 13 contribue aussi à permettre l'enfoncement de la bague entretoise 15, en vue de la déformation dudit joint 13.

L'on en s'éloignerait pas du cadre de l'invention, telle que définie dans les revendications, par des modifications de détail des formes des divers composants du dispositif précédemment décrit, ou en destinant ce dispositif d'étanchéité à des tubes ou autres objets cylindriques analogues, utilisés dans d'autres domaines d'application.

## Revendications

1. Dispositif d'étanchéité pour tube ou autre objet cylindrique traversant une paroi pourvue d'une ouverture circulaire, caractérisé en ce que :
- ladite paroi (1), autour de l'ouverture (6) de passage du tube (4), présente un épaulement annulaire (11) délimitant une surface annulaire plane raccordée à une surface cylindrique (12), et définissant un logement annulaire,
- une partie (10) du tube (4) fait saillie au-delà de l'épaulement (11),
- entre le tube (4) et ladite surface cylindrique (12) est disposé au moins un joint torique élastique (13), entourant le tube (4),
- le joint torique (4) est inséré dans une bague rigide (14), de hauteur inférieure au diamètre de la section du joint torique (13) à l'état libre,
- une entretoise cylindrique (15) est introduite dans le logement annulaire, entre le tube (4) et la surface cylindrique (12) précitée, et en regard du joint torique (13) inséré dans la bague (14), et
- des moyens de serrage sont prévus, pour solliciter l'entretoise (15) en direction du joint torique (13), en déformant ce joint (13) vers l'intérieur et en le pressant contre le tube (4).

2. Dispositif d'étanchéité selon la revendication 1, caractérisé en ce que l'entretoise annulaire (15) est dotée d'au moins une bride saillant radialement vers l'extérieur, et percée de trous, tandis que les moyens de serrage sont constitués par des goujons, solidaires de la paroi (1), qui sont disposés autour de l'ouverture (6) de celle-ci et qui traversent lesdits trous.

3. Dispositif d'étanchéité selon la revendication 1 ou 2, caractérisé en ce que, le tube (4) s'interrompant sensiblement au niveau de la paroi (1), seule une extrémité (10) du tube (4) fait saillie au-delà de l'épaulement (11), et l'entretoise cylindrique (15) est conformée en un anneau, obturé par une plaque circulaire d'occultation (16), apte à donner accès à l'intérieur du tube (4).

4. Dispositif d'étanchéité selon l'une quelconque des revendications 1 à 3, caractérisé en ce qu'il est appliqué à un tube en verre de silice (4) monté dans la cuve (1) d'un appareil de stérilisation d'eau par traitement aux rayons ultra-violets, le dispositif d'étanchéité étant mis en oeuvre à chacune des deux extrémités (10) du tube (4), faisant saillie au-dessus de l'épaulement (11) de l'une des deux ouvertures de passage (6) ménagées dans la paroi de la cuve (1).

5. Dispositif d'étanchéité selon les revendications 3 et 4, caractérisé en ce que la plaque d'occultation (16) est prévue pour donner accès à un générateur de rayons ultraviolets (5), logé dans le tube (4).
